# EUROPEAN PATENT SPECIFICATION

(11) **EP 1 876 754 B1**
(45) Date of publication and mention of the grant of the patent: **22.02.2012**
(21) Application number: 06741751.9
(22) Date of filing: 28.04.2006
(51) Int. Cl.: H04L 12/24, H04L 29/12

(54) **METHOD SYSTEM AND SERVER FOR IMPLEMENTING DHCP ADDRESS SECURITY ALLOCATION**
VERFAHREN, SYSTEM AND SERVER ZUR IMPLEMENTIERUNG VON DHCP-ADRESSEN-SICHERHEITS-ZUTEILUNG
PROCEDE, SYSTEME ET SERVEUR POUR METTRE EN OEUVRE L'ATTRIBUTION DE SECURITE D'ADRESSE DHCP

(30) Priority: 29.04.2005 CN 200510069417
(43) Date of publication of application: 09.01.2008
(73) Proprietor: Huawei Technologies Co., Ltd., Longgang District, Shenzhen Guangdong 518129 (CN)
(72) Inventor: WEI, Jiahong, Huawei Administration Building, Guangdong 518129 (CN); LI, Jun, Huawei Administration Building, Guangdong 518129 (CN); CHEN, Wumao, Huawei Administration Building, Guangdong 518129 (CN)
(74) Representative: Pfenning, Meinig & Partner GbR
(86) International application number: PCT/CN2006/000833
(87) International publication number: WO 2006/116926

(56) References cited:
- WO-A-99/16266
- WO-A-2004/006503
- CN-A- 1 450 766
- CN-A- 1 458 761
- JP-A- 2004 228 799
- KR-A- 2003 055 695
- PATRICK MOTOROLA BCS M: "DHCP Relay Agent Information Option; rfc3046.txt" IETF STANDARD, INTERNET ENGINEERING TASK FORCE, IETF, CH, 1 January 2001 (2001-01-01), XP015008829 ISSN: 0000-0003
- REN F. ET AL.: 'DHCP and Relative Secure Problem' COMPUTER ENGINEERING vol. 30, no. 17, September 2004, pages 127 - 129, XP008096602

## Description

### Field of the Invention

The present invention relates to the technical field of network communications, in particular, to a method, a system and a server for realizing a secure assignment of a Dynamic Host Configuration Protocol (DHCP) address.

### Background of the Invention

As access technologies such as ADSL (Asymmetrical Digital Subscriber Line), Ethernet become more and more mature, broadband access becomes more and more popular; and IPTV (Internet Protocol Television) video and VolP (Voice over Internet protocol) services developed based on broadband access network become more and more abundant. The development of each service needs to employ a dedicated terminal; for example, video service needs to use STB (Set Top Box), voice service needs to use IAD (Integrated Access Device). Each dedicated terminal needs to obtain a local address before a service is carried out, and then each service may be carried out using the local address.

In a communication network, each terminal usually obtains an IP (Internet Protocol) address based on DHCP protocol. However, in a traditional online service, PPPoE (Point-to-Point Protocol over Ethernet) is usually employed, and an AAA (Authentication, Authorization and Accounting) server is needed to authenticate an access subscriber and assign the IP address. Usually, The AAA server may be an RADIUS (Remote Authentication Dial In User Service) server or other authentication servers.

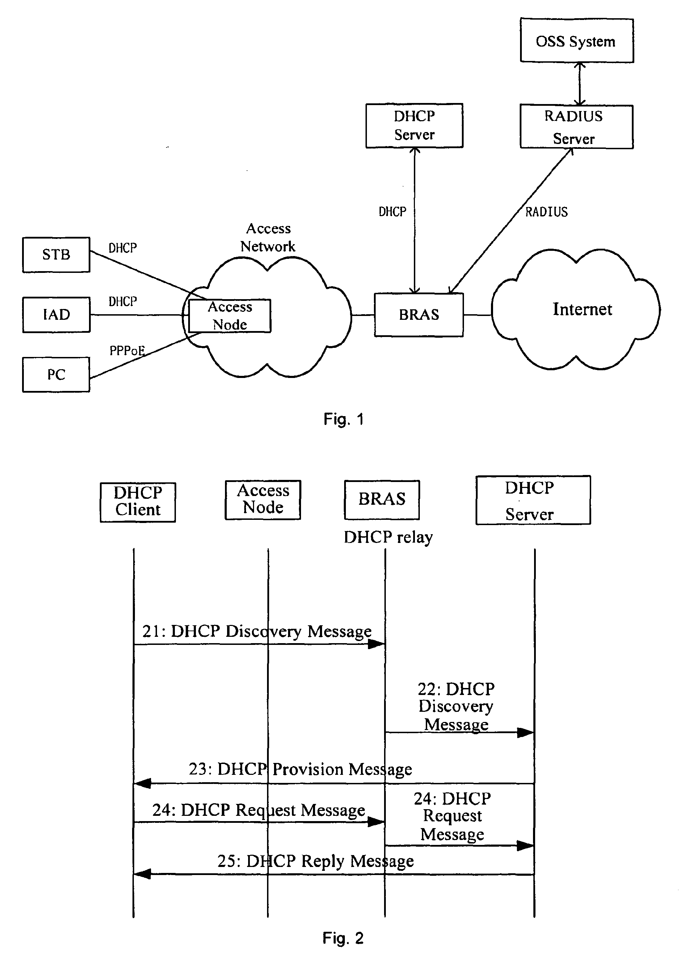

Figure 1 shows a structure of a network communication system in which an authentication is performed by an RADIUS server and the IP address is obtained via a DHCP server.

DHCP server is a server for managing IP addresses and is adapted to respond to an address assignment request from a computer and assign an appropriate IP address to the computer.

DHCP client is a terminal adapted to obtain network parameters such as the IP address using DHCP protocol, including computer, STB and IAD.

RADIUS server is adapted to manage the account and password of a subscriber and perform an authentication of an access subscriber.

BRAS (Broadband Remote Access Server) is adapted to manage the access of a broadband subscriber; for a PPPoE subscriber, the BRAS acts as an RADIUS client and initiates an authentication request to the RADIUS server; and for a DHCP subscriber, the BRAS implements the DHCP relay function

Access Network is an intermediate network between the subscriber household and the BRAS.

Access Node is a device connecting with a subscriber line directly in an access network, such as ADSL access device DSLAM (Digital Subscriber Line Access Multiplexer).

OSS (Operations Support Systems) is a system for the operator to release and manage a service.

In Figure 1, a DHCP client such as STB and IAD may be assigned with a corresponding IP address using DHCP protocol by a DHCP server disposed in the network.

The specific process in which each DHCP client of Figure 1 obtains the address is as shown in Figure 2, including the following steps.

Step 21: A DHCP client switches on, sends a DHCP Discovery message to search a server capable of providing the DHCP service.

Step 22: As a DHCP relay, a BRAS relays the DHCP Discovery message to the designated DHCP server.

Step 23: The DHCP server returns a DHCP Offer message to indicate that the DHCP server is capable of assigning an IP address to the client.

Step 24: The DHCP client sends a DHCP Request message and the BRAS relays the DHCP request message to the DHCP server.

Step 25: The DHCP server assigns an appropriate IP address and returns a DHCP Reply message.

Therefore, the DHCP client may obtain the IP address, and thus access the network and obtain the network service.

It can be seen from the above DHCP address assignment process that: during the process in which the DHCP client obtains the IP address in a DHCP mode, an invalid subscriber may easily obtain the corresponding IP address and thus obtain the network service. Therefore, the problem that a hacker maliciously uses up the IP address resources and attacks a network is easy to occur. Moreover, after the hacker attacks the network, the hacker cannot be traced.

Additionally, the operator needs to use a DHCP server to manage the IP address of the user of the DHCP client and use an RADIUS server to manage the IP address of the user of the PPPoE client. As a result, there exists two sets of IP address resource management mechanisms, the data is decentralized, and the management cost is high.
In addition, WO 99/16266 A discloses the following contents. Applications running on a mobile station or an external network entity such as an Internet service provider may specify on an individual application flow basis a requested quality of service. From that requested quality of service, an optimal type of bearer to transfer the application flow through the mobile communications network is determined. For example, a circuit-switched bearer may be allocated if the request is for a real-time service, and a packet-switched bearer may be allocated if the request is for a non-real time type of service. Various other decision making criteria may be employed. A mobile station and a mobile network gateway node each include a mapper for mapping an individual application flow to one of a circuit-switched network and a packet-switched network bearers depending on the quality of service requested for the individual application flow. The network layer quality of service parameters corresponding to an individual application flow are mapped to circuit-switched bearer parameters if the application flow is mapped to the circuit-switched network and to packet-switched bearer parameters if the application flow is mapped to the packet-switched network. The gateway node includes a common access server which permits a mobile station initially establishing a communications session with an external network entity to perform only a single, common access procedure for subsequent communications using one of the circuit-switched and packet-switched networks. After that common access procedure is completed, subsequent application flows between the mobile station and the external network entity are established using abbreviated procedures without having to access the external network entity.
Further, IETF STANDARD "DHCP Relay Agent Information Option; rfc 3046.txt" discloses technical contents in connection with DHCP Relay Agent.
Further, a patent application (WO/2004/006503) provides an arrangement and a method with dynamic port configuration of network equipment for communication in a broadband network. A central managing database in connection with a Dynamic Host Configuration Protocol server is keeping templates with recordings of network equipment parameters for their physical port settings and deployed services. Hence, enabling dynamic updating of port settings by conveying parameter recordings from the Dynamic Host Configuration Protocol server. The parameter settings are updated in the intermediate means. However, in the technical solution of D3, because the database is located out of the DHCP server, the data management cost is high and the security for data transmission is low.

### Summary of the Invention

In view of the above problems in the prior art, an object of the present invention is to provide a method, a system and a server for realizing a secure assignment of a DHCP address. And therefore the security of the address assignment process of the DHCP server may be effectively guaranteed and the data management cost is low.

The object of the present invention is realized by the following technical solutions.
A method for realizing a secure assignment of a DHCP address, comprising:
receiving, by an access server, a DHCP Discovery message;
inserting, by the access server, location information of the DHCP client into the DHCP Discovery message;
sending, by the access server, the DHCP Discovery message with the location information of the DHCP client to a DHCP authentication server;
receiving, by the DHCP authentication server, the DHCP Discovery message with the location information of the DHCP client, wherein the DHCP authentication server is a DHCP server having an authentication function configured locally, the DHCP authentication server comprises a local database comprising identification information saved for a valid subscriber locally;
performing an authentication of the DHCP client based on the location information and the identification information saved for the valid subscriber locally by the DHCP authentication server; and
sending, by the DHCP authentication server, a DHCP message with address information that is assigned to the DHCP client which has passed the authentication via the access server, after the authentication of the DHCP client is passed.
A DHCP authentication server for realizing a secure assignment of a DHCP address, the DHCP authentication server having an authentication function configured locally, and comprising an authentication processing module, a DHCP server for assigning an IP address to a DHCP client which requests for an IP address, and a local database comprising identification information saved for a valid subscriber locally, wherein:
the authentication processing module is adapted to obtain location information of a client initiating a DHCP process, perform a validity authentication of the client according to the location information and the identification information saved for the valid subscriber, and send a DHCP Discovery message of a DHCP client which has passed the validity authentication to the DHCP server; and
the DHCP server is adapted to receive the DHCP Discovery message sent by the authentication processing module and send a DHCP Offer message to the DHCP client, and assign an IP address to a corresponding DHCP client in an address pool of the DHCP server when the DHCP client sends a DHCP request message.
A system for realizing a secure assignment of a DHCP address, comprising an access server and a DHCP authentication server; wherein
the access server is adapted to receive the DHCP Discovery message sent from the DHCP client, insert location information of the DHCP client into the DHCP Discovery message and send the DHCP Discovery message with the location information to the DHCP authentication server; and
the DHCP authentication server has an authentication function configured locally, and is adapted to receive the DHCP Discovery message with the location information of the DHCP client and perform an authentication of the DHCP client based on the location information and identification information saved for a valid subscriber locally; and send a DHCP message with address information that is assigned to the DHCP client which has passed the authentication via the access server.

Moreover, in the present invention, addresses may be managed by an RADIUS server unitedly, in other words, the DHCP server and the RADIUS server unitedly manages the IP addresses, thus the cost of network management may be towered. In addition, the original security measures of the RADIUS server may be used to control the number of IP addresses to be obtained by a subscriber, so that the attack of malicious address use-up may be effectively prevented. Even if the network attack or other network security problems occur, the physical location of the subscriber may be traced according to the IP address, so that a hacker may be effectively deterred from carrying out an attack activity.

The present invention has good compatibility, in other words, during the implementation of the present invention, no extra interface and command is added to the OSS system, and the service management process on the user of the DHCP client is consistent with the original service release management process on the PPPoE client. As a result, the investment of the operator may be protected.

### Brief Description of the Drawings

Figure 1 is a structural representation of a broadband access system;

Figure 2 is a schematic diagram showing a process in which a DHCP server obtains an address;

Figure 3 is a structural representation of the DHCP authentication server according to the present invention;

Figure 4 is another structural representation system according to the present invention; and

Figure 5 is a schematic diagram of a DHCP address assignment process based on the system shown in Figure 4.

### Detailed Description of the Embodiments

The main concept of the present invention lies in that: during the process in which a DHCP client obtains an address from a DHCP server, a validity authentication process on the DHCP client is added, so that an invalid subscriber may be prevented from attacking the DHCP server. In addition, based on the above concept, the address management of the DHCP server and the authentication server may be united, thus it is easy to perform address management. The authentication server includes an AAA server such as a RADIUS server. Optionally, the authentication server may be other authentication servers with the similar function.

One embodiment of the present invention provides a method for realizing a secure assignment of a DHCP address, mainly including the following.

(1) A DHCP client sends a DHCP Discovery message via an access network.

(2) The access server on the network side (such as BRAS and access node) determines identification information of the DHCP client, such as the port number, VPI (Virtual path identifiers)NCI (Virtual channel identifiers) and VLAN ID (Virtual Local Area Network ID), according to ingress port information of the DHCP Discovery message, and performs an authentication of the DHCP client based on the identification information of the DHCP client and preconfigured identification information for a valid subscriber.

(3) The DHCP Discovery message of the DHCP client having passed the authentication is sent to the DHCP server, and the address is assigned to the DHCP client via the DHCP server. The specific address assignment process is the same as a conventional address assignment process, and the repeat description thereof is omitted.

Moreover, a corresponding DHCP server with an authentication function may be configured in the network, so that the DHCP server may first perform an authentication process after receiving a DHCP Discovery message sent from a DHCP client, and the corresponding address will only be assigned after the authentication is passed.

The present invention provides a DHCP authentication server with the authentication function. Descriptions of the DHCP authentication server will now be illustrated in conjunction with the drawings respectively.

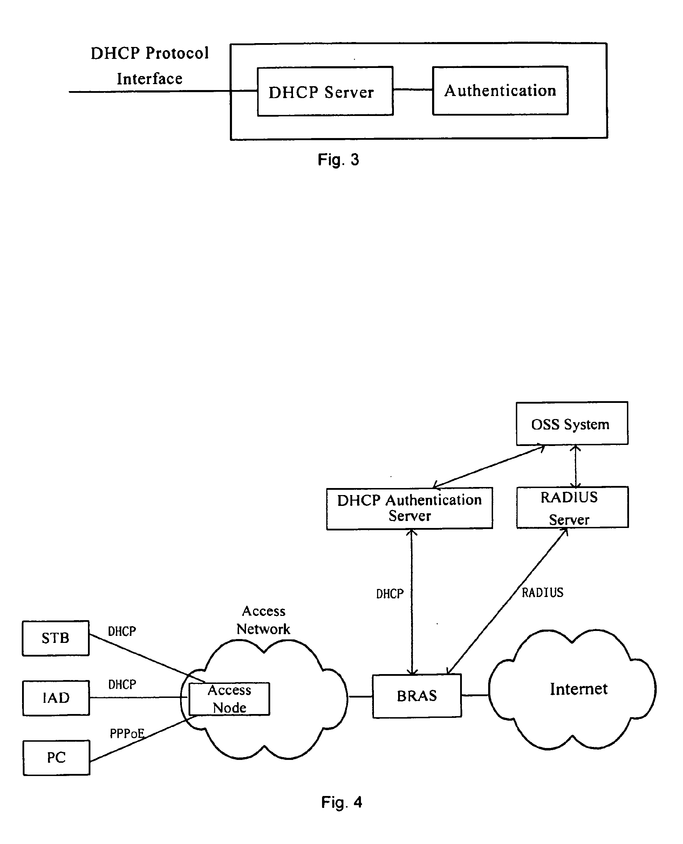

For the DHCP authentication server with the authentication function, the authentication function is configured and implemented locally. The specific structure of the DHCP authentication server is as shown in Figure 3, including an authentication processing module and a DHCP server module.

The authentication processing module is adapted to obtain the identification information of the DHCP client during initiating the DHCP process, perform a validity authentication of the client according to the identification information saved for valid subscribers, and then send an authentication result to the DHCP server module, wherein the identification information of the valid subscriber is saved in a corresponding storage module (not shown).

The DHCP server module is adapted to obtain the authentication result on the DHCP client from the authentication processing module, send a DHCP Offer message to the DHCP client with the authentication result of PASSED to indicate that the DHCP server may assign a corresponding IP address to the DHCP client, and then assign the corresponding IP address to the DHCP client after the DHCP client sends a DHCP request message. Thus, the function of the DHCP server is implemented.

At this point, the DHCP authentication server operates in a server mode, corresponds to a DHCP server with a secure authentication function, and may implement the authentication and address assignment for a client independently.

The above DHCP authentication server with the authentication function may be configured in any network in need of a DHCP server to realize the corresponding function of address assignment.

The present invention further provides a corresponding system with a DHCP address assignment and authentication function for realizing a secure assignment of a DHCP address. The structure of the system is shown in Figure 4, specifically including a DHCP client, an access network and a DHCP authentication server. The DHCP authentication server is adapted to perform a validity authentication of a DHCP Discovery message of the DHCP client obtained by the access network, and perform an address assignment to the DHCP client which has passed the authentication.

In the system according to the present invention, the DHCP authentication server may perform the authentication of the DHCP client and assign a corresponding IP address in the following mode.

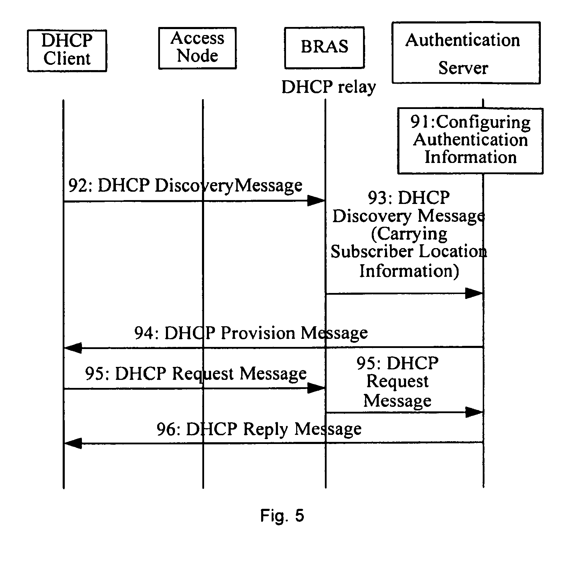

As shown in Figure 5, the validity authentication is performed on the identification information of the DHCP client according to the identification information of the valid subscriber saved locally, and the DHCP server may assign the corresponding IP address to the DHCP client which has passed the authentication.

Specifically, in the system, the access node and BRAS support the capture of a DHCP message and insert an option Option82 into the DHCP message, so that the DHCP authentication server may obtain the corresponding identification information of the DHCP client after receiving the DHCP message. In the option Option82, subscriber location information, acting as the identification information, is identified. Specifically, the subscriber location information includes port information, VPI/VCI information and VLAN ID. The option Option82 may be inserted into the DHCP message on the access node, or the option Option82 may be inserted into the DHCP message on the BRAS.

The present invention further provides a corresponding method for realizing a secure assignment of a DHCP address based on the above system. A detail description will now be illustrated below.

For example, the method is described in the case that the DHCP authentication server operates in a server mode, as shown in Figure 4 and Figure 5.

Step 91: When a subscriber opens an account, the operator adds a piece of data to a DHCP authentication server and records the subscriber location information, the encoding mode is consistent with the option Option82 inserted by the access node or the BRAS, and the MAC address of a terminal (STB, IAD) may be selectively recorded.

Step 92: When a DHCP client needs to obtain the IP address, the DHCP client needs to send a DHCP Discovery message to the BRAS.

Step 93: As a DHCP relay, the BRAS captures the DHCP message and inserts option Option82 into the message, and then sends the DHCP Discovery message carrying the subscriber location information to the DHCP authentication server. The subscriber location information, such as port information, VPI/VCI and VLAN ID, is identified in the option Option82.

The DHCP authentication server receives the DHCP message relayed by the BRAS, extracts the option Option82 and the MAC address of the terminal as the identification information, queries a local database, and performs an authentication of the identification information of the DHCP client according to the identification information saved for a valid subscriber locally. If the authentication is passed, the DHCP authentication server returns a DHCP Offer message to the DHCP client, as described in Step 94.

Step 94: The DHCP authentication server sends a DHCP Offer message to the DHCP client.

Step 95: After receiving the DHCP Offer message, the DHCP client sends a DHCP request message to the DHCP authentication server.

Step 96: The DHCP authentication server assigns the IP address to the DHCP client, and sends the IP address to the DHCP client via a DHCP Reply message.

Similarly, as described in Step 93 of Figure 5, the BRAS inserts the option Option82. In practical application, the option Option82 may also be inserted by an access node like DSLAM, while the BRAS only acts as the DHCP relay. Other processes are the same as those described above.

In conclusion, the present invention may enhance the security of the address assignment in DHCP mode greatly, and may perform an access authentication of a subscriber according to location information, and may only assign an IP address to a valid subscriber or a valid terminal. Therefore, the attack of malicious address use-up may be effectively prevented. Moreover, when the network attack or other network security problems occur, the physical location of the subscriber may be traced according to the IP address, so that a hacker may be effectively deterred from carrying out an attack activity.

Additional advantages and modifications will readily occur to those skilled in the art. Therefore, the present invention in its broader aspects is not limited to the specific details and representative embodiments shown and described herein. Accordingly, various modifications and variations may be made without departing from the scope of the present invention as defined by the appended claims and their equivalents.

## Claims

1. A method for realizing a secure assignment of a DHCP address, comprising:
receiving, by an access server, a DHCP Discovery message (91);
inserting, by the access server, location information of the DHCP client into the DHCP Discovery message (93);
sending, by the access server, the DHCP Discovery message with the location information of the DHCP client to a DHCP authentication server (93);
receiving, by the DHCP authentication server, the DHCP Discovery message with the location information of the DHCP client (93),
**characterized in that**:
the DHCP authentication server is a DHCP server having an authentication function configured locally, the DHCP authentication server comprises a local database comprising identification information saved for a valid subscriber locally;
wherein the method further comprises:
performing, by the DHCP authentication server, an authentication of the DHCP client based on the location information and the identification information saved for the valid subscriber locally; and
sending, by the DHCP authentication server, a DHCP message with address information that is assigned to the DHCP client which has passed the authentication via the access server, after the authentication of the DHCP client is passed (96).

2. The method for realizing the secure assignment of the DHCP address according to claim 1, wherein, the location information comprises:
a port number, a circuit number and a connection number of the DHCP client.

3. The method for realizing the secure assignment of the DHCP address according to claim 1 or 2, wherein, receiving the DHCP Discovery message with the location information of the DHCP client by the DHCP authentication server and performing the authentication of the DHCP client based on the location information and the identification information saved for the valid subscriber locally by the DHCP authentication server comprises:
receiving, by the DHCP authentication server, the DHCP discovery message with the location information of the DHCP client and performing a validity authentication of the DHCP client according to the location information and the identification information saved for the valid subscriber locally.

4. The method for realizing the secure assignment of the DHCP address according to claim 3, further comprising:
assigning, by the DHCP authentication server, the address information to the DHCP client which has passed the authentication after receiving authentication pass information.

5. A DHCP authentication server for realizing a secure assignment of a DHCP address, comprising a DHCP server for assigning an IP address to a DHCP client which requests for an IP address, **characterized in that**:
the DHCP authentication server has an authentication function configured locally, and the DHCP authentication server further comprises: an authentication processing module, and a local database comprising identification information saved for a valid subscriber locally, wherein:
the authentication processing module is adapted to obtain location information of a client initiating a DHCP process, perform a validity authentication of the client according to the location information and the identification information saved for the valid subscriber, and send a DHCP Discovery message of a DHCP client which has passed the validity authentication to the DHCP server; and
the DHCP server is adapted to receive the DHCP Discovery message sent by the authentication processing module and send a DHCP Offer message to the DHCP client, and assign an IP address to a corresponding DHCP client in an address pool of the DHCP server when the DHCP client sends a DHCP request message.

6. The DHCP authentication server according to claim 5, wherein, the location information comprises:
a port number, a circuit number and a connection number of the DHCP client.

7. A system for realizing a secure assignment of a DHCP address, comprising an access server and a DHCP authentication server; wherein
the access server is adapted to receive the DHCP Discovery message sent from the DHCP client, insert location information of the DHCP client into the DHCP Discovery message and send the DHCP Discovery message with the location information to the DHCP authentication server;
**characterized in that**:
the DHCP authentication server has an authentication function configured locally, and is adapted to receive the DHCP Discovery message with the location information of the DHCP client and perform an authentication of the DHCP client based on the location information and identification information saved for a valid subscriber locally; and send a DHCP message with address information that is assigned to the DHCP client which has passed the authentication via the access server.

8. The system according to claim 7, wherein, the DHCP authentication server is the DCHP authentication server as recited in claim 5.

## Patentansprüche

1. Verfahren zum Realisieren einer sicheren Zuteilung einer DHCP-Adresse, umfassend:
Empfangen einer DHCP Discovery Nachricht durch einen Zugangsserver (91);
Einfügen von Ortsinformationen des DHCP Client durch den Zugangsserver in die DHCP Discovery Nachricht (93);
Senden der DHCP Discovery Nachricht durch den Zugangsserver mit den Ortsinformationen des DHCP Client an einen DHCP Authentisierungsserver (93);
Empfangen der DHCP Discovery Nachricht mit den Ortsinformationen des DHCP Client durch den DHCP Authentisierungsserver (93),
**dadurch gekennzeichnet, dass**:
der DHCP Authentisierungsserver ein DHCP Server mit einer lokal konfigurierten Authentisierungsfunktion ist, der DHCP Authentisierungsserver eine lokale Datenbank umfasst, die Identifikationsinformationen umfasst, die für einen gültigen Teilnehmer lokal gesichert sind;
wobei das Verfahren weiterhin Folgendes umfasst:
Durchführen einer Authentisierung des DHCP Client durch den DHCP Authentisierungsserver auf der Basis der Ortsinformationen und der Identifikationsinformationen, die lokal für den gültigen Teilnehmer gespeichert wurden; und
Senden einer DHCP Nachricht durch den DHCP Authentisierungsserver mit Adressinformationen, die dem DHCP Client zugeteilt sind, der die Authentisierung bestanden hat, über den Zugangsserver, nachdem die Authentisierung des DHCP Client bestanden worden ist (96).

2. Verfahren zum Realisieren der sicheren Zuteilung der DHCP Adresse nach Anspruch 1, wobei die Ortsinformationen Folgendes umfassen:
eine Portnummer, eine Schaltungsnummer und eine Verbindungsnummer des DHCP Client.

3. Verfahren zum Realisieren der sicheren Zuteilung der DHCP Adresse nach Anspruch 1 oder 2, wobei das Empfangen der DHCP Discovery Nachricht mit den Ortsinformationen des DHCP Client durch den DHCP Authentisierungsserver und Durchführen der Authentisierung des DHCP Client auf der Basis der Ortsinformationen und der Identifikationsinformationen, die lokal durch den DHCP Authentisierungsserver für den gültigen Teilnehmer gespeichert wurden, Folgendes umfasst:
Empfangen der DHCP Discovery Nachricht durch den DHCP Authentisierungsserver mit den Ortsinformationen des DHCP Client und Durchführen einer Gültigkeitsauthentisierung des DHCP Client gemäß den Ortsinformationen und den Identifikationsinformationen, die lokal für den gültigen Teilnehmer gespeichert wurden.

4. Verfahren zum Realisieren der sicheren Zuteilung der DHCP Adresse nach Anspruch 3, wobei das Verfahren weiterhin Folgendes umfasst:
Zuteilen der Adressinformationen durch den DHCP Authentisierungsserver dem DHCP Client, der die Authentisierung bestanden hat, nach dem Empfangen von Authentisierungs-Bestanden-Informationen.

5. DHCP Authentisierungsserver zum Realisieren einer sicheren Zuteilung einer DHCP-Adresse, umfassend einen DHCP Server, zum Zuteilen einer IP-Adresse einem DHCP Client, der eine IP-Adresse anfordert, **dadurch gekennzeichnet, dass**:
der DHCP Authentisierungsserver eine lokal konfigurierte Authentisierungsfunktion aufweist und der DHCP Authentisierungsserver weiterhin Folgendes umfasst: ein Authentisierungsverarbeitungsmodul und eine lokale Datenbank, umfassend lokal für einen gültigen Teilnehmer gespeicherte Identifikationsinformationen, wobei:
das Authentisierungsverarbeitungsmodul ausgelegt ist zum Erhalten von Ortsinformationen eines Client, einen DHCP-Prozess initiierend, Durchführen einer Gültigkeitsauthentisierung des Client gemäß den Ortsinformationen und den Identifikationsinformationen, die für den gültigen Teilnehmer gespeichert wurden, und Senden einer DHCP Discovery Nachricht eines DHCP Client, der die Gültigkeitsauthentisierung bestanden hat, an den DHCP Server; und
der DHCP Server ausgelegt ist zum Empfangen der von dem Authentisierungsverarbeitungsmodul gesendeten DHCP Discovery Nachricht und Senden einer DHCP Offer Nachricht an den DHCP Client und Zuteilen einer IP-Adresse einem entsprechenden DHCP Client in einem Adresspool des DHCP Servers, wenn der DHCP Client eine DHCP Anforderungsnachricht sendet.

6. DHCP Authentisierungsserver nach Anspruch 5, wobei die Ortsinformationen Folgendes umfassen:
eine Portnummer, eine Schaltungsnummer und eine Verbindungsnummer des DHCP Client.

7. System zum Realisieren einer sicheren Zuteilung einer DHCP Adresse, umfassend einen Zugangsserver und einen DHCP Authentisierungsserver; wobei der Zugangsserver ausgelegt ist zum Empfangen der von dem DHCP Client gesendeten DHCP Discovery Nachricht, Einfügen von Ortsinformationen des DHCP Client in die DHCP Discovery Nachricht und Senden der DHCP Discovery Nachricht mit den Ortsinformationen an den DHCP Authentisierungsserver; **dadurch gekennzeichnet, dass**:
der DHCP Authentisierungsserver eine lokal konfigurierte Authentisierungsfunktion aufweist und ausgelegt ist zum Empfangen der DHCP Discovery Nachricht mit den Ortsinformationen des DHCP Client und Durchführen einer Authentisierung des DHCP Client auf der Basis der Ortsinformationen und Identifikationsinformationen, die lokal für einen gültigen Teilnehmer gespeichert wurden; und Senden einer DHCP Nachricht mit Adressinformationen, die dem DHCP Client zugeteilt sind, der die Authentisierung bestanden hat, über den Zugangsserver.

8. System nach Anspruch 7, wobei der DHCP Authentisierungsserver der DHCP Authentisierungsserver nach Anspruch 5 ist.

## Revendications

1. Procédé de réalisation d'une assignation sûre d'une adresse au protocole DHCP, comprenant :
la réception, par un serveur d'accès, d'un message de recherche au protocole DHCP (91),
l'insertion, par le serveur d'accès, des informations de localisation du client au protocole DHCP dans le message de recherche au protocole DHCP (93), l'envoi, par le serveur d'accès, du message de recherche au protocole DHCP avec les informations de localisation du client au protocole DHCP à un serveur d'authentification au protocole DHCP (93),
la réception, par le serveur d'authentification au protocole DHCP, du message de recherche au protocole DHCP avec les informations de localisation du client au protocole DHCP (93),
**caractérisé en ce que**,
le serveur d'authentification au protocole DHCP est un serveur au protocole DHCP comportant une fonction d'authentification configurée localement, le serveur d'authentification au protocole DHCP comprend une base de données locale comprenant des informations d'identification sauvegardées localement pour un abonné valide,
dans lequel le procédé comprend en outre :
l'exécution, par le serveur d'authentification au protocole DHCP, d'une authentification du client au protocole DHCP sur la base des informations de localisation et des informations d'identification sauvegardées localement pour l'abonné valide, et
l'envoi, par le serveur d'authentification au protocole DHCP d'un message au protocole DHCP avec des informations d'adressage qui sont assignées au client au protocole DHCP qui a réussi l'authentification par l'intermédiaire du serveur d'accès, après que l'authentification du client au protocole DHCP a réussi (96).

2. Procédé de réalisation d'une assignation sûre de l'adresse au protocole DHCP selon la revendication 1, dans lequel les informations de localisation comprennent :
un numéro de port, un numéro de circuit et un numéro de connexion du client au protocole DHCP.

3. Procédé de réalisation d'une assignation sûre de l'adresse au protocole DHCP selon la revendication 1 ou 2, dans lequel la réception du message de recherche au protocole DHCP avec les informations de localisation du client au protocole DHCP par le serveur d'authentification au protocole DHCP et l'exécution de l'authentification du client au protocole DHCP sur la base des informations de localisation et des informations d'identification sauvegardées localement pour l'abonné valide par le serveur d'authentification au protocole DHCP comprennent :
la réception, par le serveur d'authentification au protocole DHCP du message de recherche au protocole DHCP avec les informations de localisation du client au protocole DHCP ainsi que l'exécution d'une authentification de validité du client au protocole DHCP en fonction des informations de localisation et des informations d'identification sauvegardées localement pour l'abonné valide.

4. Procédé de réalisation d'une assignation sûre de l'adresse au protocole DHCP selon la revendication 3, comprenant en outre :
l'assignation, par le serveur d'authentification au protocole DHCP des informations d'adressage au client au protocole DHCP qui a réussi l'authentification après la réception d'informations de réussite de l'authentification.

5. Serveur d'authentification au protocole DHCP permettant de réaliser une assignation sûre d'une adresse au protocole DHCP, comprenant un serveur au protocole DHCP destiné à assigner une adresse au protocole IP à un client au protocole DHCP qui demande une adresse IP, **caractérisé en ce que** :
le serveur d'authentification au protocole DHCP comporte une fonction d'authentification configurée localement, et le serveur d'authentification au protocole DHCP comprend en outre : un module de traitement d'authentification et une base de données locale comprenant des informations d'identification sauvegardées localement pour un abonné valide, dans lequel :
le module de traitement d'authentification est conçu pour récupérer des informations de localisation d'un client démarrant un processus au protocole DHCP, pour effectuer une authentification de validité du client en fonction des informations de localisation et des informations d'identification sauvegardées pour l'abonné valide, ainsi que pour envoyer au serveur au protocole DHCP un message de recherche au protocole DHCP d'un client au protocole DHCP qui a réussi l'authentification de validité, et
le serveur au protocole DHCP est conçu pour recevoir le message de recherche au protocole DHCP envoyé par le module de traitement d'authentification et pour envoyer un message d'offre au protocole DHCP au client au protocole DHCP ainsi que pour assigner une adresse IP à un client correspondant au protocole DHCP dans un regroupement d'adresses du serveur au protocole DHCP lorsque le client au protocole DHCP envoie un message de demande au protocole DHCP.

6. Serveur d'authentification au protocole DHCP selon la revendication 5, dans lequel les informations de localisation comprennent :
un numéro de port, un numéro de circuit et un numéro de connexion du client au protocole DHCP.

7. Système permettant de réaliser une assignation sûre d'une adresse au protocole DHCP comprenant un serveur d'accès et un serveur d'authentification au protocole DHCP, dans lequel
le serveur d'accès est conçu pour recevoir le message de recherche au protocole DHCP envoyé par le client au protocole DHCP, pour insérer des informations de localisation du client au protocole DHCP dans le message de recherche au protocole DHCP ainsi que pour envoyer le message de recherche au protocole DHCP avec les informations de localisation au serveur d'authentification au protocole DHCP,
**caractérisé en ce que** :
le serveur d'authentification au protocole DHCP possède une fonction d'authentification configurée localement et il est conçu pour recevoir le message de recherche au protocole DHCP avec les informations de localisation du client au protocole DHCP et pour effectuer une authentification du client au protocole DHCP sur la base des informations de localisation et d'informations d'identification sauvegardées localement pour un abonné valide, ainsi que pour envoyer un message au protocole DHCP comportant des informations d'adressage qui sont assignées au client au protocole DHCP qui a réussi l'authentification par l'intermédiaire du serveur d'accès.

8. Système selon la revendication 7, dans lequel le serveur d'authentification au protocole DHCP est le serveur d'authentification au protocole DHCP conforme à la revendication 5.
